# EUROPÄISCHE PATENTANMELDUNG

(11) **EP 2 284 455 A2**
(43) Veröffentlichungstag der Anmeldung: **16.02.2011**
(21) Anmeldenummer: 10169035.2
(22) Anmeldetag: 09.07.2010
(51) Int. Cl.: F24J 2/54, H01L 31/042

(54) **Nachführvorrichtung**

(30) Priorität: 14.08.2009 DE 202009005141 U
(71) Anmelder: SCHÜCO International KG, 33609 Bielefeld (DE)
(72) Erfinder: Imkamp, Gerd, 33334 Gütersloh (DE)
(74) Vertreter: Dantz, Jan Henning

(57) **Zusammenfassung**

Nachführvorrichtung für Solarelemente, mit einem an einem Anker ( 2) festlegbaren Kopplungselement (11), das über eine Steckverbindung mit einem Trägern (8) verbunden ist, an dem ein Tragrahmen (4) mit einem Solarelement festgelegt ist, wobei der Träger (8) mindestens zwei Arme (20) zur Abstützung des Tragrahmens (4) aufweist.

## Beschreibung

Die vorliegende Erfindung betrifft eine Nachführvorrichtung für Solarelemente.

Die DE 101 92 244 offenbart eine Nachführvorrichtung für Solarelemente, mit einem Träger für das Solarelement, der an einem Aufnahmeträger um eine horizontale Drehachse verschwenkbar ist. Der Aufnahmeträger ist an einem Standpfeiler um eine vertikale Achse drehbar gelagert. Zwar kann dadurch der Träger für das Solarelement gut dem Stand der Sonne nachgeführt werden, allerdings besitzen Tragrahmen und Aufnahmeträger ein hohes Eigengewicht und sind aufwändig herzustellen. Der Aufnahmeträger ist aus vier Profilen rahmenförmig zusammengesetzt, wobei die gesamte Gewichtslast auf einem oberen Querholm lastet, was zu erheblichen Durchbiegungen führen kann. Die Stabilität gegen ein Kippen wird durch eine Lagerung am unteren Querholm erreicht, so dass eine Vielzahl von Montageschritten und Bauteilen erforderlich sind. Schließlich besteht noch der Nachteil, dass der Standpfeiler speziell auf den Aufnahmeträger abgestimmt ist, der allerdings aufgrund von unterschiedlichen Bodenstrukturen variieren kann. Dadurch wird abhängig vom Untergrund die Montage des Standpfeilers schwierig.

Es ist daher Aufgabe der vorliegenden Erfindung, eine Nachführvorrichtung für Solarelemente zu schaffen, die sich leicht montieren lässt und kostengünstig herstellbar ist.

Diese Aufgabe wird mit einer Nachführvorrichtung mit den Merkmalen des Anspruches 1 gelöst.

Erfindungsgemäß umfasst die Nachführvorrichtung für Solarelemente ein an einem Anker festlegbares Kopplungselement, das über eine Steckverbindung mit einem Träger verbunden ist, an dem ein Tragrahmen mit einem Solarelement festgelegt ist. Der Träger weist mindestens zwei Arme zur Abstützung des Tragrahmens auf, so dass beim Träger eine aufwändige Rahmenkonstruktion entfallen kann. Zudem lässt sich die Steckverbindung zuwischen Kopplungselement und Träger einfach montieren. Eine solche Steckverbindung umfasst mindestens zwei ineinander steckbare Teile, die entsprechend leicht zu montieren sind und nach der Montage eine gegenseitige Abstützung bereitstellen. Das Kopplungselement kann dabei flexibel an unterschiedliche Ankertypen montiert werden, die sich je nach Untergrund gestalten lassen. Als "Anker" im Sinne der vorliegenden Anmeldung werden im Erdreich befestigte Bauteile angesehen, also Rammpfosten, Eindrehanker, Betonpfosten, Betonfundamente oder andere im Erdreich verankerte Bauteile.

Gemäß einer bevorzugten Ausgestaltung sind die Arme an dem Träger nach oben aufspreizend angeordnet. Dadurch kann der Träger statisch optimiert sein, wobei der Winkel der Arme von der Horizontalen in einem Bereich zwischen 30 bis 60° liegen kann, insbesondere etwa 45°. Dadurch können die auftretenden Gewichtslasten optimal auf das Kopplungselement und den Anker abgetragen werden. Die Arme können dabei symmetrisch an dem Träger zu einer Mittelebene angeordnet sein.

Vorzugsweise weisen die Arme endseitig eine Halterung zur schwenkbaren Lagerung des Tragrahmens auf. Dadurch kann der Tragrahmen nicht nur um eine vertikale Achse, sondern auch um eine horizontale Achse verschwenkt werden, was den Wirkungsgrad des Solarelementes weiter erhöht. Die Halterung kann für eine einfache Montage eine offene Aufnahme zum Einfügen eines Gegenlagers des Tragrahmens aufweisen.

Für eine einfache Herstellung der Arme sind diese vorzugsweise aus einem Metallblech hergestellt, insbesondere durch Stanzen und Biegen. An den Armen kann dabei mindestens ein hervorstehender Steg mit Öffnungen für den Eingriff von Hebeln ausgebildet sein, wobei mindestens ein Hebel mit dem Tragrahmen gekoppelt ist. Dadurch kann der Tragrahmen über die Hebel in einer vorbestimmten Winkelposition fixiert werden, wobei die Hebel auch verstellbar ausgebildet sein können, um den Tragrahmen um eine horizontale Achse zu verschwenken.

In einer bevorzugten Ausgestaltung weist der Träger einen vertikalen Lagerzapfen auf, der an dem Kopplungselement drehbar gelagert ist. Der Lagerzapfen kann dabei sowohl Gewichtskräfte als auch seitliche horizontale Kräfte auf das Kopplungselement übertragen, so dass eine stabile Abstützung gewährleistet ist. Es ist natürlich auch möglich, einen vertikalen Lagerzapfen an dem Kopplungselement auszubilden, der in einer Buchse an dem Träger eingreift, um eine stabile Drehlagerung zu erhalten. Vorzugsweise ist an dem Kopplungselement zumindest eine horizontale Axiallagerfläche ausgebildet, auf der der Träger abgestützt ist.

Um den Träger mit dem Solarelement zu bewegen, ist vorzugsweise an dem Träger ein Antriebselement vorgesehen, mittels dem der Träger relativ zu dem Kopplungselement drehbar ist. Das Antriebselement kann dabei als Scheibe ausgebildet sein, an der ein mit einem Antrieb gekoppeltes Band angeordnet ist. Das Band kann dabei als Seil, Zahnriemen oder anderes Band ausgebildet sein, mittels dem das Antriebselement an dem Träger drehbar ist. Mit dem Band können dann eine Vielzahl von Nachführvorrichtungen zusammen bewegt werden.

Die Erfindung wird nachfolgend anhand eines Ausführungsbeispiels mit Bezug auf die beigefügten Zeichnungen näher erläutert. Es zeigen:

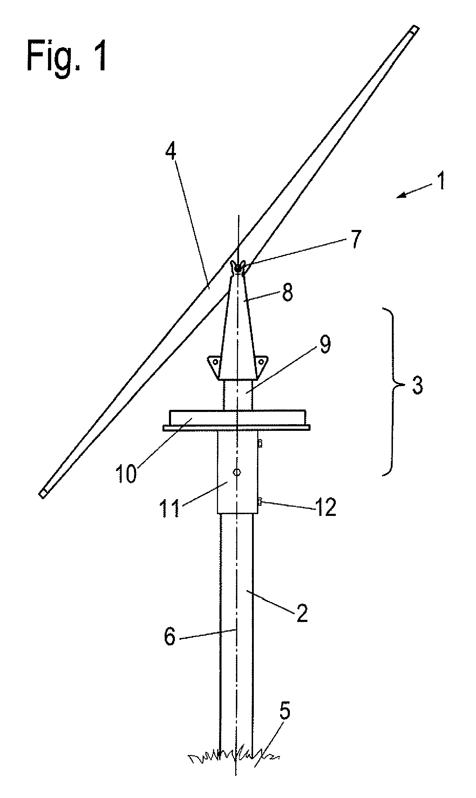

- Figur 1: eine Seitenansicht einer erfindungsgemäßen Nachführvorrichtung;

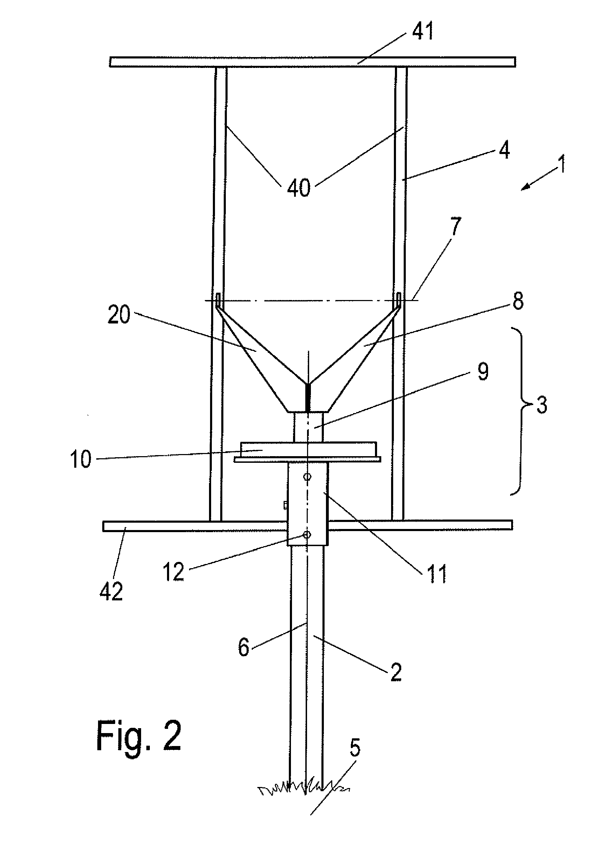

- Figur 2: eine Rückansicht der Nachführvorrichtung der Figur 1;
- Figur 3: eine perspektivische Ansicht des Kopplungselementes und des Trägers der Nachführvorrichtung der Figur 1, und
- Figur 4: eine geschnittene Seitenansicht des Trägers und des Kopplungsele- mentes der Figur 3.

Eine Nachführvorrichtung 1 für Solarelemente ist an einem im Erdreich 5 befestigten Anker 2 montiert. Der Anker 2 kann als Rammpfosten, Eindrehanker, Stahlprofil, Betonpfosten oder Betonfundament ausgebildet sein.

Die Nachführvorrichtung 1 umfasst ein Drehgestell 3, das ein Kopplungselement 11 und einen Träger 8 aufweist. An dem Träger 8 ist ein Tragrahmen 4 abgestützt, an dem ein Solarelement gehalten ist. Das Solarelement kann als Kollektor, Absorber, Reflektor oder Photovoltaikmodul ausgebildet sein, das dem Stand der Sonne nachgeführt wird. Der Tragrahmen 4 umfasst zwei voneinander beabstandete Streben 40, die über eine obere horizontale Querstrebe 41 und eine untere horizontale Querstrebe 42 miteinander verbunden sind. Die Befestigung des Solarmoduls kann über entsprechende Befestigungsmittel an den Streben 40, 41 und 42 des Tragrahmens 4 erfolgen. An dem Tragrahmen 4 können Solarelemente mit einer Fläche zwischen 4 bis 10 m², insbesondere 5 bis 7 m² Fläche montiert werden.

Der Träger 8 umfasst zwei nach oben aufspreizende Arme 20, an deren Enden jeweils eine nach oben offene Aufnahme 14 ausgebildet ist, in die ein Zapfen des Tragrahmens 4 einfügbar ist. Hierdurch kann der Tragrahmen 4 einfach aufgelegt werden, was die Montage vereinfacht. Die Arme 20 stehen in einem Winkel zwischen 30° bis 60° nach oben hervor und sind symmetrisch zu einer Mittelebene mit der vertikalen Achse 6 angeordnet. Dadurch ist der Tragrahmen 4 an den beiden Aufnahmen 14 um eine horizontale Achse 7 schwenkbar gelagert.

Der Träger 8 mit dem Tragrahmen 4 ist um eine vertikale Achse 6 drehbar gelagert. Hierfür umfasst der Träger 8 auf der zu dem Kopplungselement 11 gewandten Seite einen vertikalen Lagerzapfen 9, der über eine Steckverbindung mit dem Kopplungselement 11 gekoppelt ist. An dem Lagerzapfen 9 ist eine Scheibe 10 drehfest angeordnet, die als Antriebselement dient und mit einem nicht dargestellten Band verbunden ist, um den Träger 8 mit dem Solarelement zu drehen. Das Band kann dabei eine Vielzahl von Nachführvorrichtungen mit Trägern 8 drehbar antreiben. Das Band kann dabei als Zahnriemen, Seil oder anderes Antriebsband ausgebildet sein.

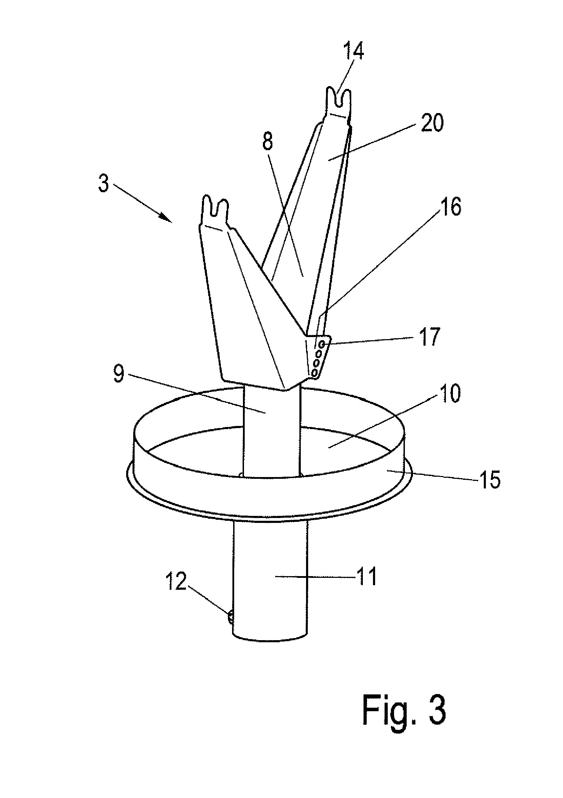

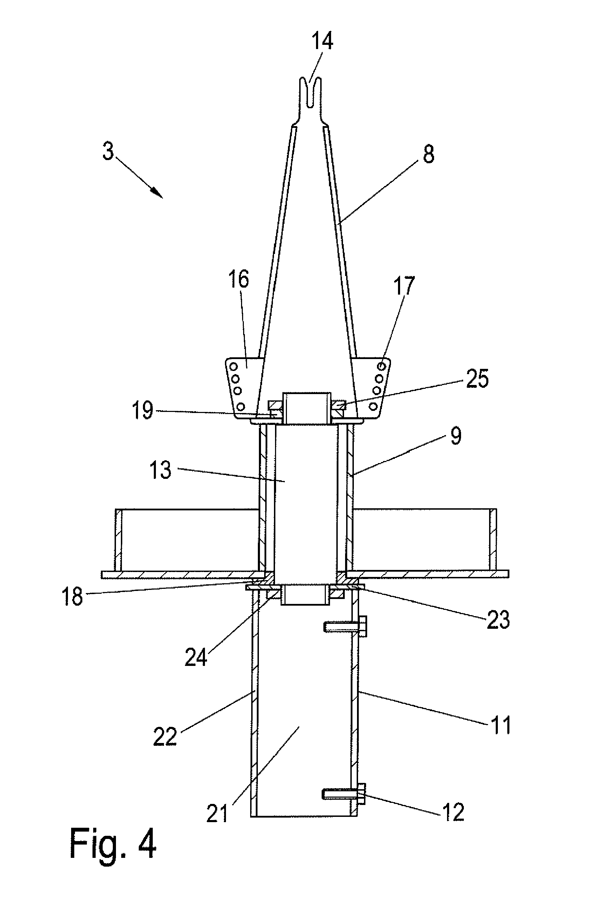

Der Träger 8 und das Kopplungselement 11 sind in den Figuren 3 und 4 im Detail dargestellt. Das Kopplungselement 11 weist auf der zu dem Anker 2 gewandten unteren Seite ein Hohlprofil 22 auf, das eine innere Aufnahme 21 besitzt. An den Seitenwänden des Hohlprofils 22 sind Gewindeöffnungen ausgebildet, in die Befestigungsmittel 12 in Form von Schrauben, Gewindebolzen oder anderen Befestigungselementen eingedreht sind. Dadurch kann ein oberer Abschnitt des Ankers 2 klemmend an dem Kopplungselement festgelegt werden. Aufgrund der Vielzahl unterschiedlicher Anker 2, die je nach Bodenbeschaffenheit variieren können, kann das Kopplungselement 11 weitgehend universell über die Befestigungsmittel an dem Anker 2 klemmend festgelegt werden.

Das Hohlprofil 22 weist an seinem oberen Ende eine Abdeckung 23 auf, an der ein Axiallager 18 angeordnet ist. Das Axiallager 18 kann als Wälzlager, Gleitring oder anderes Axiallager ausgebildet sein, an dem der Lagerzapfen 9 des Trägers 8 abgestützt ist. Dabei können an dem Axiallager 18 sowohl vertikale Kräfte als auch horizontale Kräfte übertragen werden.

Das Kopplungselement 11 weist einen Führungszapfen 13 auf, der vertikal nach oben hervorsteht und am unteren Ende auf der Abdeckung 23 abgestützt ist. Ferner ist der Führungszapfen 13 über eine Mutter 24 an der Abdeckung 23 festgeklemmt. Der Führungszapfen 13 dient zur Führung des Trägers 8 und weist ein Lager 19 auf, das an einem mittleren Abschnitt des Trägers 8 montiert ist. Dadurch ist der Träger 8 über das Lager 19 sowie das Axiallager 18 an dem Kopplungselement 11 gehalten, so dass eine stabile Abstützung gewährleistet ist. Das Lager 19 kann über eine Mutter 25 an dem Führungszapfen 13 festgelegt sein.

Der Träger 8 weist in dem Bereich benachbart zu dem Lager 19 horizontal und radial hervorstehende Stege 16 auf, an denen Öffnungen 17 ausgebildet sind. In die Öffnungen 17 sind nicht dargestellte Hebel montierbar, mittels denen eine Abstützung des Tragrahmens 4 erfolgt. Über die Hebel kann ein Verschwenken des Tragrahmens 4 um die Achse 7 vorgenommen werden oder es wird eine vorbestimmte Winkelposition des Tragrahmens 4 um die Achse 7 fixiert.

Das Antriebselement 10 weist eine zylindrische Außenfläche 15 auf, an der Eingriffsmittel für das Antriebsband ausgebildet sind.

In dem dargestellten Ausführungsbeispiel sind die Träger 8 aus gestanzten und gebogenen Metallblechen hergestellt, die zwei Arme 20 mit im Wesentlichem U-förmigem Querschnitt aufweisen. Es ist natürlich auch möglich, die Arme 20 des Trägers 8 anders auszubilden.

## Patentansprüche

1. Nachführvorrichtung für Solarelemente, mit einem an einem Anker (2) festlegbaren Kopplungselement (11), das über eine Steckverbindung mit einem Trägern (8) verbunden ist, an dem ein Tragrahmen (4) mit einem Solarelement festgelegt ist, wobei der Träger (8) mindestens zwei Arme (20) zur Abstützung des Tragrahmens (4) aufweist.

2. Nachführvorrichtung nach Anspruch 1, **dadurch gekennzeichnet, dass** die Arme (20) an dem Träger (8) nach oben aufspreizend angeordnet sind.

3. Nachführvorrichtung nach Anspruch 1 oder 2, **dadurch gekennzeichnet, dass** die Arme (20) endseitig eine Halterung (14) zur schwenkbaren Lagerung des Tragrahmens (4) aufweisen.

4. Nachführvorrichtung Anspruch 3, **dadurch gekennzeichnet, dass** die Halterung (14) eine offene Aufnahme zum Einfügen eines Gegenlagers des Tragrahmens (4) aufweist.

5. Nachführvorrichtung nach einem der Ansprüche 1 bis 4, **dadurch gekennzeichnet, dass** die Arme (20) aus einem Metallblech hergestellt sind.

6. Nachführvorrichtung nach einem der Ansprüche 1 bis 5, **dadurch gekennzeichnet, dass** an den Armen (20) mindestens ein hervorstehender Steg (16) mit Öffnungen (17) für den Eingriff mit Hebeln ausgebildet ist, wobei mindestens ein Hebel mit dem Tragrahmen (4) gekoppelt ist.

7. Nachführvorrichtung nach einem der Ansprüche 1 bis 6, **dadurch gekennzeichnet, dass** der Träger (8) einen vertikalen Lagerzapfen (9) aufweist, der an dem Kopplungselement (11) drehbar gelagert ist.

8. Nachführvorrichtung nach einem der Ansprüche 1 bis 7, **dadurch gekennzeichnet, dass** an dem Kopplungselement (11) eine horizontale Axiallagerfläche ausgebildet ist, auf der der Träger (8) abgestützt ist.

9. Nachführvorrichtung nach einem der Ansprüche 1 bis 8, **dadurch gekennzeichnet, dass** an dem Träger (8) ein Antriebselement (10) vorgesehen ist, mittels dem der Träger (8) relativ zu dem Kopplungselement (11) drehbar ist.

10. Nachführvorrichtung nach Anspruch 9, **dadurch gekennzeichnet, dass** das Antriebselement (10) als Scheibe ausgebildet ist, an der ein mit einem Antrieb gekoppeltes Band angeordnet ist.
